# FASCICULE DE BREVET EUROPEEN

(11) **EP 0 540 437 B1**
(45) Date de publication et mention de la délivrance du brevet: **24.06.1998**
(21) Numéro de dépôt: 92420391.2
(22) Date de dépôt: 30.10.1992
(51) Int. Cl.: C07F 9/38, C07F 9/40

(54) **Procédé de production d'acides, de sels et/ou d'esters aminoalcanephosphoniques**
Verfahren zur Herstellung von Aminoalkanphosphonsäure und deren Salze und/oder Ester
Process for the production of aminoalkanephosphonic acids and their salts and/or esters

(30) Priorité: 31.10.1991 FR 9113717
(43) Date de publication de la demande: 05.05.1993
(73) Titulaire: RHONE-POULENC AGROCHIMIE, 69009 Lyon (FR)
(72) Inventeur: Axiotis, Georges, F-69009 Lyon (FR); Deweerdt, Hélène, F-69006 Lyon (FR)
(74) Mandataire: Chrétien, François

(56) Documents cités:
- EP-A- 0 153 284
- EP-A- 0 242 706
- DE-A- 2 741 504
- FR-A- 2 010 112
- US-A- 2 635 112
- US-A- 4 235 809
- US-A- 4 579 956
- SYNTHESIS no. 5, 1988, pages 370 - 372 SOROKA, M. ET AL 'TRITYLAMINE (TRIPHENYLMETHYLAMINE) IN ORGANIC SYNTHESIS; I. THE SYNTHESIS OF N-(TRIPHENYLMETHYL)ALKANAMINES, 1-(TRIPHENYLMETHYLAMINO)ALKYLPHOSPHONIC ESTERS, AND 1-AMINOALKYLPHOSPHONIC ACIDS AND ESTERS'
- SYNTHESIS no. 4, 1977, pages 239 - 242 LUKSZO, J. ET AL. 'NEW PROTECTIVE GROUPS IN THE SYNTHESIS OF 1-AMINOALKANEPHOSPHONIC ACIDS AND ESTERS'
- CHEMICAL ABSTRACTS, vol. 103, 1985, Columbus, Ohio, US; abstract no. 196152p, YUAN, C. ET AL. 'ORGANOPHOSPHORUS COMPOUNDS. XII. SYNTHESIS OF .ALPHA.-AMINOALKYLPHOSPHONIC ACIDS' page 688 ;
- CHEMICAL ABSTRACTS, vol. 96, 1982, Columbus, Ohio, US; abstract no. 104372w, ISSLEIB, K. ET AL. 'SYNTHESIS OF 1-AMINOALKANE PHOSPHONIC ACIDS VIA BENZHYDRYLIC SCHIFF BASES' page 721 ;

## Description

La présente invention concerne un nouveau procédé pour accéder aux acides et /ou aux sels ou esters α aminoalcanephosphoniques de formule générale (I) : 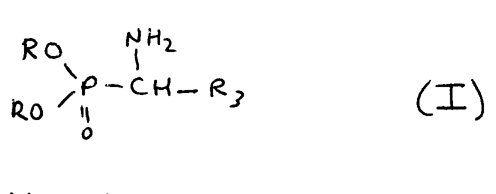 avec R identique ou différent, choisis parmi l'atome d'hydrogène,un groupement alkyl linéaire ou ramifié avec un à six atomes de carbone ,un atome de métal alcalins ou alcalino terreux.

R₃ = un atome d'hydrogène, ou un groupement alkyl,cycloalkyl,aryl,ou aralkyl, ces groupements pouvant être éventuellement substitués par un ou plusieurs hétéro atomes, de préférence halogène.

Les produits de formule (I) sont connus et utilisables comme fongicides (EP-A-153284, US-A-4994447, US-A-4888330). Le produit pour lequel est un atome d'hydrogène et R₃ un éthyle est l'ampropylfos, commercialisé, utilisable en traitements foliaire ou de semences.

Les voies d'accès à ces produits décrites dans les brevets ci-dessus se sont avérées insuffisantes pour faire face à une production industrielle de ceux ci, notamment en raison de processus catalytique par hydrogénation, de conditions de températures et de pression élevées et des temps de réaction trop longs.

Dans le brevet US-A-2635112 on a décrit un procédé de préparation de diesters d'acides amino-méthylphosphonique.

Dans 'Synthesis', mai 1988, pages 370-2, on a décrit un procédé de préparation d'acides alpha-aminoalkanephosphoniques.

Un but de la présente invention est donc de conduire à ces composés d'une manière plus économique que les voies d'accès auparavant décrites.

Un autre but de l'invention est de fabriquer les composés de formule (I) avec des conditions d'hydrolyse beaucoup plus douces que les conditions déjà connues et surtout des temps de réaction beaucoup plus faibles.

De plus, un troisième but de cette invention est d'utiliser un procédé qui permet un meilleur contrôle des effluents aqueux et gazeux.

Enfin, un autre but de l'invention est de donner des composés de formule (I) avec un rendement et une pureté optimisés.

Le procédé de préparation des acides ou esters et sels (R,S) 1 aminoalcanephosphonique passe par trois (acides) ou quatre (esters, sels) étapes qui peuvent être schématiser de la façon suivante :
a) 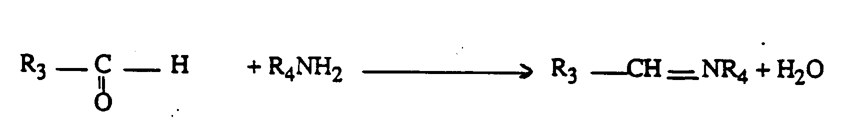 dans laquelle R₄ est un groupe alcoyl, linéaire on ramifié, avec 1 à 4 atomes de carbone
b) 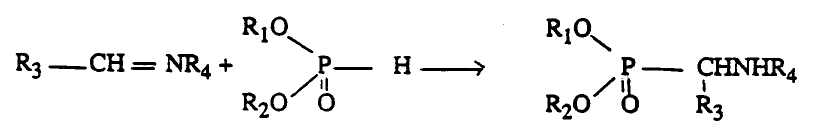
c) 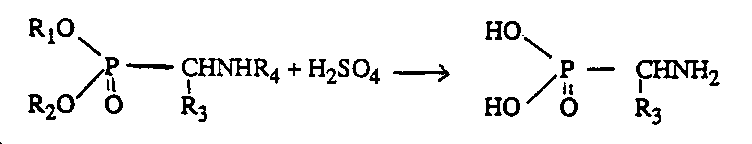 dans laquelle R₁, R₂, identiques on différents sont un groupement alkyl linéaire on ramifié avec un à six atomes de carbone
d) 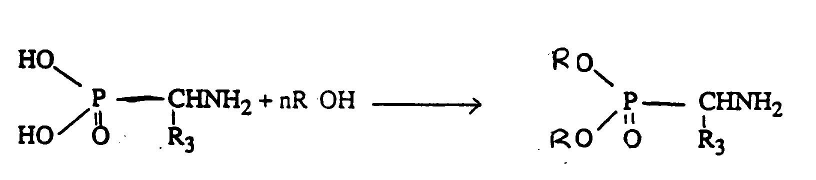 avec n = 1 ou 2.

La réaction a) entre une amine primaire et un dérivé carbonyl (ou une forme protégée d'un dérivé carbonyl, c'est à dire un acétal, un hémiacétal ou dioxolanne, qu'il convient donc de faire réagir en milieu acide pour générer le carbonyl), peut s'écrire selon le schéma :

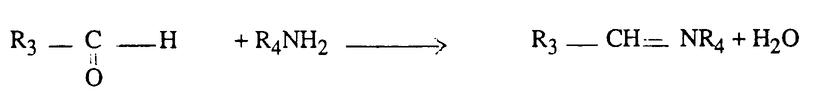

On effectue dans du cyclohexane la réaction entre l'aldéhyde, par exemple du propanal et l'amine primaire par exemple la tertiobutylamine à température ambiante (20°C). On obtient alors l'imine correspondante par exemple la tertiobutylpropanimine, qui n'est qu'un composé intermédiaire.On peut donc l'engager sans aucun traitement supplémentaire dans l'étape réactionnelle suivante (étape b), mais ceci conduit à un taux d'impureté élevé.Une imine distillée conduit à une meilleure sélectivité, mais dans ce cas la distillation fait perdre une bonne partie (30%) de l'imine synthétisée.

En réalisant l'étape a) en milieu solvant organique on peut facilement décanter l'eau formée qui est responsable du taux élevé d'impureté.

Avec un solvant tel que le cyclohexane, on élimine 95% de cette eau formée, alors que l'utilisation de dichlorométhane ne permet l'élimination que de 61% de la quantité d'eau produite, le toluène 83% et le mélange toluène - soude 92%.

On peut éliminer l'eau restante par distillation azéotropique, mais il faut se placer à une telle température (80°C avec du cyclohexane) que l'imine se dégrade.On préfère donc travailler en solvant cyclohexane, avec une simple décantation de l'eau produite.

L'étape b) de condensation de l'imine obtenue en a) sur un dialkylphosphite s'écrit selon la réaction :

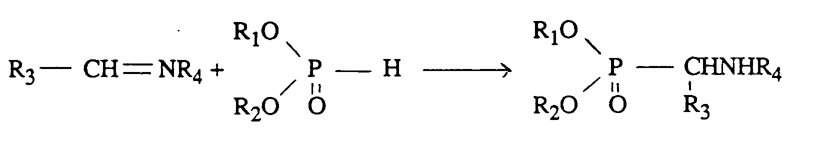

Les étapes a) et b) sont réalisées en milieu solvant organique tel que le cyclohexane, le dichlorométhane, ou le toluène.On coule la solution organique d'imine obtenue à l'étape a) sur le dialkylphosphite pur ou lui même en solution organique.

L'étape c) d'hydrolyse du diester obtenu, et précipitation du diacide obtenu s'effectue selon le schéma :

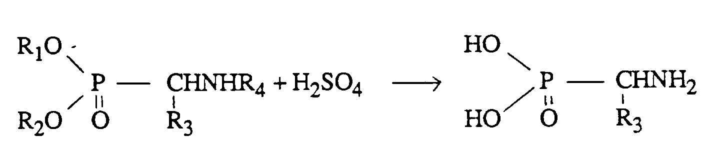

Le composé diester obtenu après l'étape b) peut être isolé et utilisé tel quel.Toutefois, les composés qui ont montré un plus grand intérêt comme fongicides sont les acides et les sels, c'est à dire les composés pour lesquels R₁ et/ou R₂ sont choisis parmi les métaux alcalins ou alcalinoterreux.L'acide étant donc intéressant soit en tant que tel, soit comme intermédiaire d'obtention des sels, on réalise donc pratiquement toujours cette étape d'hydrolyse suivie de la précipitation de l'acide phosphonique obtenu.

Les conditions de l'hydrolyse c) sont plus douces que celles auparavant décrites. En effet, on connaissait déjà cette étape, en tant que réaction élémentaire, d'hydrolyse acide d'un diester 1 aminoalcanephosphonique mais avec utilisation de l'acide bromohydrique, sous pression et à une température de l'ordre de 175-180 °C pendant une durée de 48 heures.

L'utilisation selon l'invention de 2 à 5 équivalents d'acide sulfurique par mole de diester permet de réaliser l'hydrolyse en quelques heures (4 à 6), à pression atmosphérique et température de l'ordre de 120-140 °C.

Dans ces conditions les deux fonctions acides sont libérées de même que l'amine secondaire qui redonne NH₂. L'obtention de composés où R₄ est différent de l'atome d'hydrogène est possible, si on se place à température plus faible, par exemple aux environs de 80 °C. Dans ce cas là, seules les deux fonctions acides sont générées.

L'étape éventuelle d) de salification estérification du diacide obtenu en c) s'écrit : 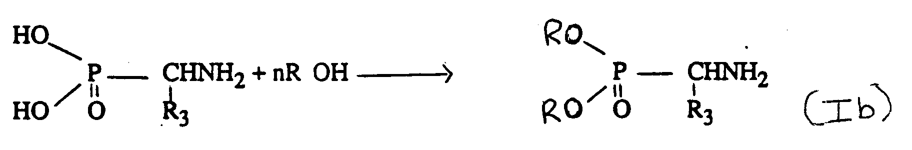 avec et n = 1 ou 2.Quand n = 1,l'un des deux R dans la formule (Ib) est l'atome d'hydrogène.

Les exemples qui suivent illustrent de façon non limitative la présente invention.

### Exemple 1 : Synthèse de l'acide aminopropanephosphonique (voie diéthylphosphite 1).

a) On coule 3 moles (174 g) de propanal en une heure sur 3 moles (219 g) de tertiobutylamine contenue dans un ballon à température ambiante (20°C).On ajoute en fin de coulée 393 g de cyclohexane pour décanter l'eau formée.On obtient alors 51,5 g de phase aqueuse et 734,5 g de phase organique (d = 0,786).
b) On prélève alors 183 g du mélange réactionnel précédent (phase organique) de manière à avoir 0,75 mole (84,75 g) d'imine produite que l'on introduit en une heure sur 0,75 mole (103,5 g) de diéthylphosphite porté à 60°C.
   Le mélange réactionnel total (286,5 g à 34% de cyclohexane) est laissé à 60°C puis en une heure on monte la température à 80°C, que l'on maintient pendant encore une heure, avant d'arrêter chauffage et agitation.
   On obtient alors des taux de transformation (TT) de l'imine et du phosphite de 97 et 96% respectivement, et des rendements de réaction (RR) en diester attendu de 89% et en impureté hydroxy ((EtO)₂POCH(OH)Et) de 6 %.
c) L'hydrolyse du diester est réalisée avec 3 équivalents d'acide sulfurique (96%) par mole de diester à une température de 140°C. On coule le diester dans la solution acide chaude.
   Après cinq heures de réaction, le diacide obtenu en phase aqueuse est traité par du méthanol puis par par de la triéthylamine (NEt₃).
   On obtient alors les résultats suivants :
   RR en acide aminoalcanephosphonique/diester = 81%
   Pureté de l'acide aminoalcanephosphonique = 99%.

### Exemple 2 : Synthèse de l'acide aminopropanephosphonique (voie diéthylphosphite 2).

a) On introduit 2 moles (146 g) de tertiobutylamine dans un ballon à 20°C dans lequel on coule sur l'amine 2 moles (116 g) de propanal à 20°C. En fin d'introduction du propanal, 250 g de cyclohexane sont introduits pour permettre la décantation.On obtient alors 35 g de phase aqueuse et 477 g de phase organique (d = 0,78) que l'on partage en deux lots de 238,5g.
b) Sur un de ces lot, on prélève 179 g de manière à avoir 0,75 mole (84,75 g) d'imine que l'on coule sur 0,75 mole (103,5 g) de diéthylphosphite à 50°C en 40 minutes sous agitation.Puis, on augmente la température à 60°C que l'on maintient durant 6 heures.Après évaporation sous vide du laboratoire à 70°C de 278 g du mélange obtenu, on aboutit à 184 g de produit dont on fait l'analyse par chromatographie en phase gazeuse et RMN.
   Le bilan est alors le suivant :
   TT de la tertiobutylpropaneimine = 96%
   TT du diéthylphosphite = 97%
   RR en diester = 90%
   RR en impureté hydroxy = 7,2%.

   Le diester est alors purifié par lavages basiques (NaOH 20% puis H₂O) pour éliminer l'impureté hydroxy ((EtO)₂POCH(OH)Et).Plusieurs lavages sont nécessaires pour limiter à 0,5% molaire la quantité d'hydroxy restante.En effet, par un seul lavage à l'eau à 60°C pendant 1H40, on garde 6% de cette impureté dans le mélange final.
c) Sur une partie du diester obtenu, et purifié à 95%, on réalise l'hydrolyse avec 3 équivalents d'acide sulfurique (96%) par mole de diester à une température de 140°C. On coule le diester dans la solution acide chaude. Après cinq heures de réaction, le diacide obtenu en phase aqueuse est traité par du méthanol puis par par de la triéthylamine (NEt₃).
   On obtient alors les résultats suivants :
   RR en acide aminoalcanephosphonique/diester = 88%
   Pureté de l'acide aminoalcanephosphonique = > 99%.

### Exemple 3 : Synthèse de l'acide aminopropanephosphonique (voie diméthylphosphite 1).

a) On introduit 2 moles (146 g) de tertiobutylamine dans un ballon à 20°C dans lequel on coule sur l'amine 2 moles (116 g) de propanal à 20°C.En fin d'introduction du propanal, 250 g de cyclohexane sont introduits pour permettre la décantation.On obtient alors 35 g de phase aqueuse et 477 g de phase organique (d = 0,78) que l'on partage en deux lots de 238,5g.
b) Sur un de ces lot, on prélève 179 g de manière à avoir 0,75 mole (84,75 g) d'imine que l'on coule sur 0,75 mole (82,5 g) de diméthylphosphite à 50°C en 40 minutes sous agitation.Puis, on augmente la température à 60°C que l'on maintient durant 6 heures.Après évaporation sous vide du laboratoire à 70°C de 257 g du mélange obtenu, on aboutit à 164 g de produit dont on fait l'analyse par chromatographie en phase gazeuse et RMN.
   Le bilan est alors le suivant :
   Taux de Transformation (TT) de l'imine = 100%
   TT du diméthylphosphite (DMP) = 100%
   Rendement de Réaction (RR) diester/DMP = 90%
   RR hydroxy ((MeO)₂POCH(OH)Et)/DMP = 4,8%
   Autres impuretés = 4,3%.
c) A partir du diester obtenu, on réalise l'hydrolyse avec 3 équivalents d'acide sulfurique à 130°C pendant quatre heures.Puis, l'acide obtenu est précipité par le méthanol et la triéthylamine.
   On a alors :
   RR en acide aminopropanephosphonique/diester = 85%
   RR en acide aminopropanephosphonique/diméthylphosphite = 77%
   Pureté de l'acide aminopropanephosphonique = 99%.

### Exemple 4 : Synthèse de l'acide aminopropanephosphonique (voie diméthylphosphite 2).

a) Dans un ballon on introduit 3,5 moles (258g) de tertiobutylamine (d = 0,7).On coule en une heure à 20°C 3,5 moles (203 g) de propanal (d = 0,8) sur l'amine.On ajoute alors 461 g de cyclohexane pour décantation, qui conduit à 60,5 g de phase aqueuse (96% de l'eau formée est éliminée) et 860 g de phase organique (d = 0,76).
b) Dans un autre ballon, on mélange 2,5 moles (275 g) de diméthylphosphite et 275 g de cyclohexane.On chauffe ce mélange de manière à avoir une température de 80°C.A cette température, on introduit 614,3 g de phase organique ce qui correspond à 2,5 moles d'imine.La coulée se fait en une heure pendant laquelle on distille du cyclohexane contenant une partie de propanal formé par rétrogradation de l'imine.On maintient alors la température à 88°C durant 4 heures.La distillation conduit à 178 g de solution cyclohexanique.
   On soutire alors un mélange réactionnel de 955 g.Le bilan matière fait apparaître une perte de 28 g.Ce mélange réactionnel (932 g, après prélèvements d'échantillons pour analyses) conduit à 517 g d'extrait sec que l'on analyse par chromatographie en phase gazeuse et RMN.
   On obtient alors :
   TT du diméthylphosphite = 100%
   RR diester/diméthylphosphite = 94%
   RR hydroxy/diméthylphosphite = 2%.

   La distillation a donc permis de diminuer notablement la formation de l'impureté hydroxy (MeO)₂POCH(OH)Et.
c) Le diester (470g , 2,03 moles) obtenu est coulé à 20 °C en 30 minutes sur une solution à 96% d'acide sulfurique (643 g donc 6,3 moles soit 3,1 eq acide/mole de diester).Puis, on monte la température jusqu'à 130 °C que l'on maintient durant cinq heures.Après précipitation, à 20°C et pH 5, par le méthanol (1,6 ml/g de solution) et la triéthylamine (340 g/mole de diester), on obtient :
   RR en acide aminopropanephosphonique/diester = 84%
   RR en acide aminopropanephosphonique/diméthylphosphite = 79%
   Pureté de l'acide aminopropanephosphonique = 99,1%.

### Exemple 5 : Etapes a) et b) avec du diéthylphosphite (autre solvant).

a) On place dans un ballon 1 mole (73 g) de tertiobutylamine à température ambiante.On coule alors 1 mole (58 g) de propanal en 15 minutes.Au bout de 45 minutes, on ajoute 130 g de dichlorométhane et 2 g de NaCl pour effectuer la décantation.On obtient alors 13 g de phase aqueuse (61% de l'eau formée est donc éliminée) et 247 g de phase organique qui après prélèvement de 4 g est mise en distillation à 50°C pendant 20 minutes.La distillation achevée, on aboutit à 236 g de mélange réactionnel.
b) On prélève 118 g de ce mélange que l'on coule sur 0,4 mole (55 g) de diéthylphosphite à 25°C.Puis la température est montée en 15 minutes à 57°C de manière à avoir un léger reflux.On maintient cette température durant 3 heures.
   Dans ces conditions, on aboutit aux résultats suivants :
   TT de la tertiobutylpropaneimine = 91%
   TT du diéthylphosphite = 98%
   RR diester = 76%
   RR en impureté hydroxy = 15%.

## Revendications

1. Procédé de préparation d'un acide, d'un sel ou d'un ester α aminoalcanephosphonique de formule générale (I) : 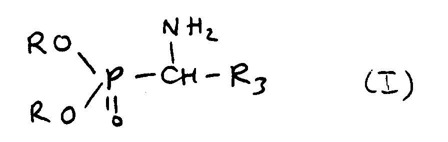 dans laquelle R identique ou différent, est choisis parmi l'atome d'hydrogène,un groupement alkyl linéaire ou ramifié avec un à six atomes de carbone ,un atome de métal alcalin ou alcalino terreux.
R₃ est un atome d'hydrogène,ou un groupement alkyl,cycloalkyl,aryl,ou aralkyl, ces groupements pouvant être éventuellement substitués par un ou plusieurs hétéroatomes ,de préférence halogène.
caractérisé en ce qu'il comporte trois (acides) ou quatre (sels ou esters) étapes, l'ensemble de ces quatre étapes peut s'écrire selon le schéma global suivant :
a) 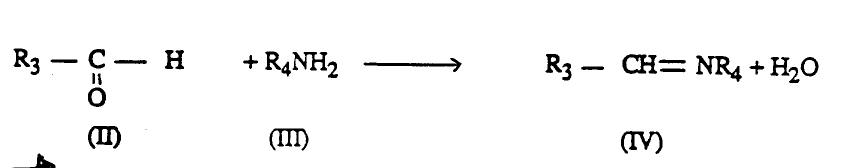 dans laquelle R₄ est un groupe alcoyl,linéaire ou ramifié,avec 1 à 4 atomes de carbone,
b) 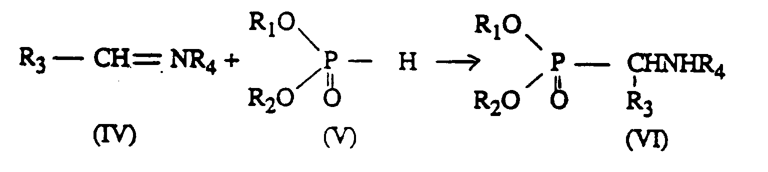 dans laquelle R₁, R₂, identiques on différents, sont un groupement alkyl linéaire on ramifié avec un à six atomes de carbone
c) 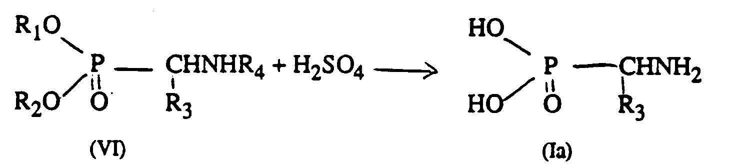
d) éventuellement, dans le cas où on souhaite préparer le composé de formule (I) dans lequel R est différent de l'atome d'hydrogène, 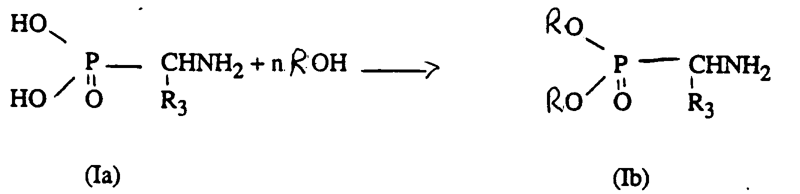 dans laquelle n égale 1 ou 2.

2. Procédé selon la revendication 1, caractérisé en ce que dans l'étape d) R est l'atome de sodium ou de potassium.

3. Procédé selon la revendication 1, caractérisé en ce que les étapes a) et b) sont effectuées en milieu solvant organique, non ou peu miscible à l'eau.

4. Procédé selon la revendication 3, caractérisé en ce que le solvant organique est choisi dans le groupe comprenant le cyclohexane ,le dichlorométhane ou le toluène.

5. Procédé selon la revendication 4, caractérisé en ce que le solvant organique est le cyclohexane.

6. Procédé selon la revendication 1, caractérisé en ce que le composé carbonyle est sous forme non protégée aldéhyde, ou sous forme protégée, acétal, hémiacétal, ou dioxolanne.

7. Procédé selon la revendication 6, caractérisé en ce que le composé carbonyle (II) est le propanal.

8. Procédé selon la revendication 1 caractérisé en ce que l'amine (III) est choisie parmi la méthyl-,l'éthyl-,la propyl- ou isopropyl-,ou la n butyl- ou tertiobutylamine.

9. Procédé selon la revendication 8, caractérisé en ce que l'amine (III) est la tertiobutylamine.

10. Procédé selon la revendication 1, caractérisé en ce que l'étape a) est effectuée avec un excès molaire d'amine (III) par rapport au dérivé carbonyle (II),avec élimination de l'eau formée.

11. Procédé selon la revendication 1, caractérisé en ce que dans l'étape b) le composé dialkylphosphite (V) est le diméthyl- ou le diéthylphosphite.

12. Procédé selon la revendication 1, caractérisé en ce que dans l'étape c) on utilise de l'acide sulfurique à raison de 2 à 5 équivalents d'acide par mole de diester (VI) à une température comprise entre 80 et 150 °C.

13. Procédé selon la revendication 12, caractérisé en ce que la réaction est réalisée avec environ 3 équivalents d'acide sulfurique à 130-140°C.

14. Procédé selon la revendication 1, caractérisé en ce que l'on purifie, à pH = 5 en fin d'étape c), l'acide aminoalcanephosphonique (Ia) formé, par précipitation dans un milieu base forte organique ou minérale.

15. Procédé selon la revendication 14, caractérisé en ce que la base est la triéthylamine.

## Claims

1. Process for the preparation of an α-aminoalkanephosphonic acid, salt or ester of general formula (I): 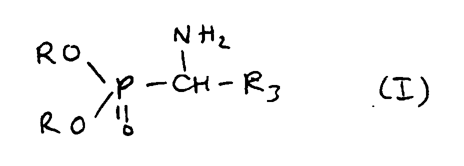 in which R, which is identical or different, is chosen from a hydrogen atom, a linear or branched alkyl group with one to six carbon atoms or an alkali metal or alkaline-earth metal atom,
R₃ is a hydrogen atom or an alkyl, cycloalkyl, aryl or aralkyl group, it being possible for these groups to be optionally substituted with one or more heteroatoms, preferably halogen,
characterized in that it comprises three (acids) or four (salts or esters) stages, it being possible for the entirety of these four stages to be written according to the following overall scheme:
a) 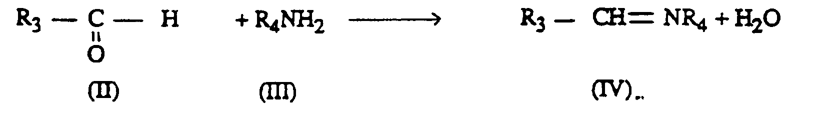 in which R₄ is a linear or branched alkyl group with 1 to 4 carbon atoms,
b) 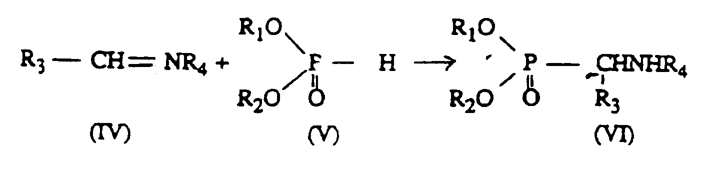 in which R₁ and R₂, which are identical or different, are a linear or branched alkyl group with one to six carbon atoms,
c) 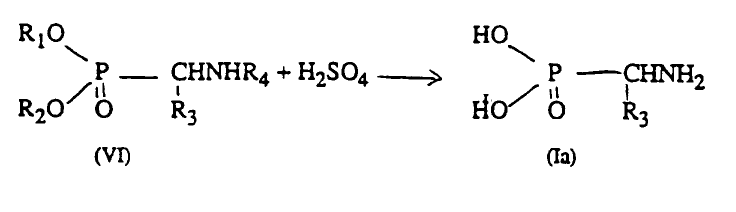
d) optionally, in the case where it is desired to prepare the compound of formula (I) in which R is other than a hydrogen atom, 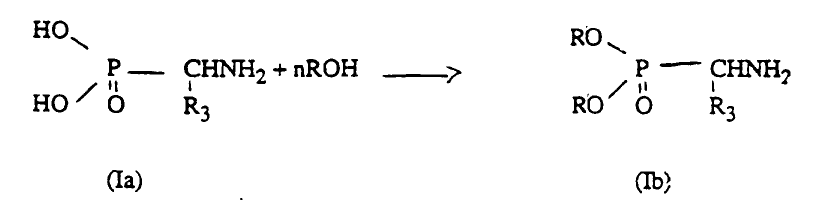 in which n is equal to 1 or 2.

2. Process according to Claim 1, characterized in that, in stage d), R is a sodium or potassium atom.

3. Process according to Claim 1, characterized in that stages a) and b) are carried out in an organic solvent medium which is immiscible or almost immiscible with water.

4. Process according to Claim 3, characterized in that the organic solvent is chosen from the group comprising cyclohexane, dichloromethane or toluene.

5. Process according to Claim 4, characterized in that the organic solvent is cyclohexane.

6. Process according to Claim 1, characterized in that the carbonyl compound is in the unprotected aldehyde form or in the protected, acetal, hemiacetal or dioxolane, form.

7. Process according to Claim 6, characterized in that the carbonyl compound (II) is propanal.

8. Process according to Claim 1, characterized in that the amine (III) is chosen from methyl-, ethyl-, propyl- or isopropyl-, or n-butyl- or tert-butylamine.

9. Process according to Claim 8, characterized in that the amine (III) is tert-butylamine.

10. Process according to Claim 1, characterized in that stage a) is carried out with a molar excess of amine (III) with respect to the carbonyl derivative (II), with removal of the water formed.

11. Process according to Claim 1, characterized in that, in stage b), the dialkyl phosphite compound (V) is dimethyl or diethyl phosphite.

12. Process according to Claim 1, characterized in that, in stage c), sulphuric acid is used in an amount of 2 to 5 equivalents of acid per mole of diester (VI) at a temperature of between 80 and 150°C.

13. Process according to Claim 12, characterized in that the reaction is carried out with approximately 3 equivalents of sulphuric acid at 130-140°C.

14. Process according to Claim 1, characterized in that the aminoalkanephosphonic acid (Ia) formed is purified at pH = 5 at the end of stage c) by precipitating in an organic or inorganic strongly basic medium.

15. Process according to Claim 14, characterized in that the base is triethylamine.

## Patentansprüche

1. Verfahren zur Herstellung einer α-Aminoalkanphosphonsäure, eines Salzes oder eines Esters derselben mit der allgemeinen Formel (I) 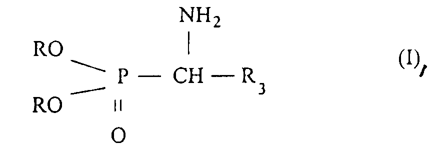 in der R, die gleich oder verschieden sind, ausgewählt sind aus Wasserstoffatom, einer linearen oder verzweigtkettigen Alkylgruppe mit 1 bis 6 Kohlenstoffatomen, einem Alkalimetall- oder Erdalkalimetallatom,
R₃ ein Wasserstoffatom oder eine Alkyl-, Cycloalkyl-, Aryl- oder Arylalkylgruppe ist, wobei diese Gruppen gegebenenfalls durch ein oder mehrere Heteroatome, vorzugsweise Halogen, substituiert sein können,
dadurch gekennzeichnet, daß das Verfahren drei (für Säuren) oder vier (für Salze oder Ester) Stufen umfaßt, wobei die Zusammenstellung dieser vier Stufen gemäß dem folgenden allgemeinen Schema beschrieben werden kann:
a) 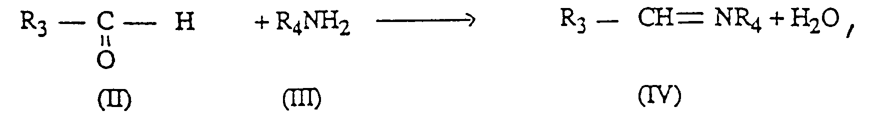 wobei R₄ eine lineare oder verzweigtkettige Alkylgruppe mit 1 bis 4 Kohlenstoffatomen ist,
b) 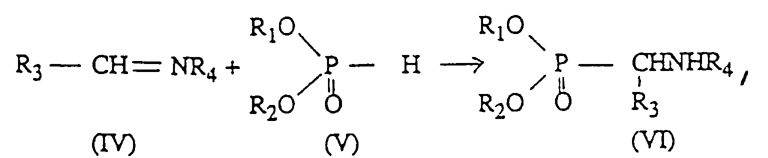 wobei R₁ und R₂, die gleich oder verschieden sind, eine lineare oder verzweigtkettige Alkylgruppe mit 1 bis 6 Kohlenstoffatomen sind,
c) 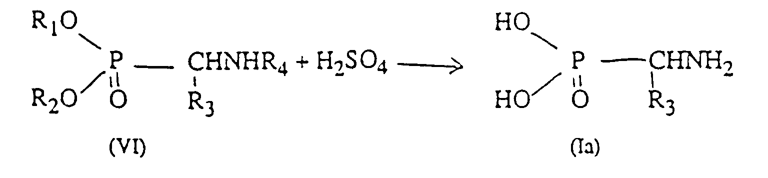
und d) gegebenenfalls in dem Falle, wenn man die Verbindung der Formel (I) herzustellen wünscht, in der R kein Wasserstoffatom ist, 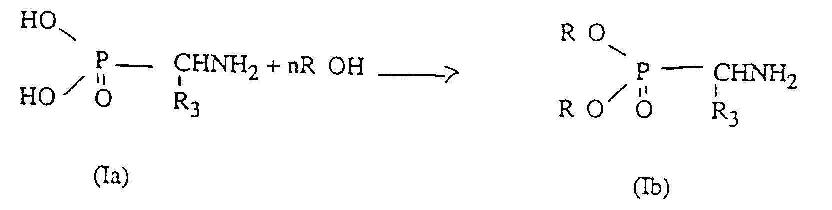 in der n gleich 1 oder 2 ist.

2. Verfahren nach Anspruch 1,
dadurch gekennzeichnet, daß in der Stufe d) R ein Natrium- oder Kaliumatom ist.

3. Verfahren nach Anspruch 1,
dadurch gekennzeichnet, daß die Stufen a) und b) in einem Medium aus mit Wasser nicht oder nur wenig mischbarem organischem Lösemittel ausgeführt werden.

4. Verfahren nach Anspruch 3,
dadurch gekennzeichnet, daß das organische Lösemittel ausgewählt wird aus der Gruppe, umfassend Cyclohexan, Dichlormethan oder Toluol.

5. Verfahren nach Anspruch 4,
dadurch gekennzeichnet, daß das organische Lösemittel Cyclohexan ist.

6. Verfahren nach Anspruch 1,
dadurch gekennzeichnet, daß die Carbonylverbindung in ungeschützter Aldehydform oder in geschützter Acetal-, Halbacetal- oder Dioxolanform vorliegt.

7. Verfahren nach Anspruch 6,
dadurch gekennzeichnet, daß die Carbonylverbindung (II) Propanal ist.

8. Verfahren nach Anspruch 1,
dadurch gekennzeichnet, daß das Amin (III) ausgewählt wird aus Methyl-, Ethyl-, Propyl- oder Isopropyl- oder n-Butyl- oder tert.-Butylamin.

9. Verfahren nach Anspruch 8,
dadurch gekennzeichnet, daß das Amin (III) tert.-Butylamin ist.

10. Verfahren nach Anspruch 1,
dadurch gekennzeichnet, daß die Stufe a) mit einem molaren Überschuß des Amins (III) bezogen auf das Carbonylderivat (II) unter Entfernung des gebildeten Wassers ausgeführt wird.

11. Verfahren nach Anspruch 1,
dadurch gekennzeichnet, daß in der Stufe b) die Dialkylphosphitverbindung (V) Dimethyl- oder Diethylphosphit ist.

12. Verfahren nach Anspruch 1,
dadurch gekennzeichnet, daß in der Stufe c) Schwefelsäure in einer Menge von 2 bis 5 Säureäquivalenten pro Mol Diester (VI) bei einer Temperatur zwischen 80 und 150°C eingesetzt wird.

13. Verfahren nach Anspruch 12,
dadurch gekennzeichnet, daß die Reaktion mit ungefähr 3 Äquivalenten Schwefelsäure bei 130-140°C ausgeführt wird.

14. Verfahren nach Anspruch 1,
dadurch gekennzeichnet, daß am Ende der Stufe c) die gebildete Aminoalkanphosphonsäure (Ia) bei einem pH-Wert von 5 durch Präzipitation in einem Milieu einer organischen oder mineralischen starken Base gereinigt wird.

15. Verfahren nach Anspruch 14,
dadurch gekennzeichnet, daß die Base Triethylamin ist.
